# EUROPÄISCHE PATENTANMELDUNG

(11) **EP 4 765 689 A1**
(43) Veröffentlichungstag der Anmeldung: **24.06.2026**
(21) Anmeldenummer: 24221595.2
(22) Anmeldetag: 19.12.2024
(51) Int. Cl.: H04J 3/06, H04Q 9/04, H04W 56/00, H04W 4/70

(54) **VERFAHREN UND SYSTEM ZUR ZEITSYNCHRONISATION VON SENSOREINHEITEN**

(71) Anmelder: Siemens Aktiengesellschaft, 80333 München (DE)
(72) Erfinder: Brandstetter, Josef, 1210 Wien (AT); Kussyk, Jaroslaw, 1170 Wien (AT); Schrödel, Oliver, 91220 Schnaittach (DE)
(74) Vertreter: Siemens Patent Attorneys

(57) **Zusammenfassung**

Verfahren zur Zeitsynchronisation von Sensoreinheiten (SU) in einem verteilten System, wobei von den Sensoreinheiten (SU) Sensordaten (SD) erfasst und über ein Funknetz (RFN) an eine Zentraleinheit (CU) übermittelt werden, und dass bei Erfassen von Sensordaten (SD) ein weiterer, aktueller Wert der internen Zeiteinheit (FC) der jeweiligen Sensoreinheit (SU) gespeichert wird, dass den erfassten Sensordaten (SD) zumindest der bei Empfang des charakteristischen Zeitmerkmals des Kennsignals gespeicherte Wert der internen Zeiteinheit, die zugehörige Senderidentifikation des Kennsignals, und der weitere, bei Erfassen der Sensordaten (SD) gespeicherte Wert der internen Zeiteinheit (FC) zugeordnet werden und gemeinsam mit den Sensordaten (SD) an die Zentraleinheit (CU) übertragen werden, und wobei die Zentraleinheit (CU) Spannungs- und Phasenwerte von zumindest einer der drei Phasenleiter eines Energieversorgungsnetzes erfasst, aus welchen Synchronisierungs-Daten (t0_{EGSₚ}, Tₚ) zur Frequenz oder Periodendauer, sowie zur Phasenlage der Spannung zumindest eines der drei Phasenleiter in Bezug auf den Erfassungszeitpunkt der Spannungsund Phasenwerte des zumindest einen der drei Phasenleiter ermittelt und an die Sensoreinheiten (SU) übermittelt werden, und die jeweilige Sensoreinheit (SU) die jeweiligen Sensordaten (SD) in Form von Stromwerten in Bezug auf die Synchronisierungs-Daten (t0_{EGSp}, Tₚ) erfasst, welche an die Zentraleinheit (CU) übertragen werden, und in der Zentraleinheit (CU) aus den Spannungswerten und Stromwerten Leistungen berechnet werden.

## Beschreibung

Die Erfindung betrifft ein Verfahren und ein System zur Zeitsynchronisation von Sensoreinheiten in einem verteilten System.

In elektrischen Energieverteilinfrastruktur, wie beispielsweise in intelligenten Gleich- und Wechselstromverteilnetzen, sog. "Smart-Grids", wird die Information über einen Netzzustand, wie beispielsweise das Spannungsniveau, die Strombelastung, den Leistungsfluss und die Lastverteilung, etc. durch viele verteilte Sensordaten erfasst und bestimmt.

Zur Überwachung und Steuerung der Netze werden üblicherweise die Sensordaten übermittelt und zentral ausgewertet.

Abhängig von der Art des Sensors und der Art der zentralen Auswertung der Sensordaten sind der Sensorwert und der Erfassungszeitpunkt für die Auswertung wichtig, um zum Beispiel eine Berechnung von Wirk- und Blindleistung auf Basis von Spannungs- und Strommesswerten zu ermöglichen, welche von unterschiedlichen Sensoren übermittelt werden können, die auch örtlich verteilt sein können.

Insbesondere für die Bestimmung der Wirk- und Blindleistung beziehungsweise der komplexen Scheinleistung ist der genaue Zeitpunkt der Messwerterfassung und insbesondere deren Bezug zueinander essenziell.

Im Stand der Technik wurde die zeitliche Synchronisation durch leitungsgebundene Kommunikationsverbindungen zwischen den Sensoren und der Auswerteeinheit gelöst oder der Spannungsmesswert wurde als analoges Messwertsignal den einzelnes Strommesssensoren über eine drahtgebundene Verbindung zugeführt.

Als drahtlose Alternativlösung ist die Verwendung bei jedem Sensor einer zusätzlichen Zeitsynchronisationsquelle bekannt, die über eine Funkverbindung zur Verfügung steht, beispielsweise einer GPS-Uhr, eines Funk-Zeitnormalsender (wie der Langwellensender DCF77) oder eines zentralen NTP-Referenzzeit-Servers ("Network Time Protocol", kurz NTP).

Der Nachteil von drahtgebundenen Kommunikationslösungen ist, dass eine Datenleitung erforderlich ist, was zu einem erhöhten Installationsaufwand und geringerer Akzeptanz der Anwender führen könnte und dies insbesondere bei der Nachrüstung der Sensoren ein relevanter Kostenfaktor und Systemkomplexitätsfaktor sein kann.

Der Nachteil von Zeitsynchronisationsquellen über Funk ist die Einschränkung bei der Einbauposition der Antenne.

So ist beispielsweise ein Empfang von GPS-/DCF77-/Mobilfunkzeitsignalen in geschlossenen Räumen sehr schwer bis nicht möglich.

Außerdem sind DCF77 oder vergleichbare Zeitinformationsdienste nicht ausreichend genau und nur regional beschränkt verfügbar.

Außerdem verursachen solche Lösungen eine unerwünschte Systemkomplexität, nachteilige Einbauvorschriften und führen ferner zu erhöhten Kosten durch einen zusätzlichen Funkempfänger und die dazugehörige Antenne.

In der Publikation EP3993290B1 ist ein Verfahren für eine Zeitsynchronisation von Sensoreinheiten eines verteilten Systems angegeben, durch welches eine zeitliche Relation zwischen den erfassten Sensordaten der Sensoreinheiten des verteilten Systems hergestellt werden kann, jedoch internen Signal-Laufzeiten nicht entsprechend bei der Signal-Erfassung berücksichtigt werden, wodurch die Genauigkeit bei der Bestimmung einer Leistungsaufnahme in einem Energieverteilungsnetz ungünstig beeinträchtigt wird.

Es ist daher Aufgabe der Erfindung eine einfachere, genaue und zuverlässige Lösung zur Synchronisation von verteilten Sensoren bereitzustellen.

Die erfindungsgemäße Aufgabe wird durch ein Verfahren zur Zeitsynchronisation von Sensoreinheiten in einem verteilten System, wobei die Sensoreinheiten jeweils eine interne Zeiteinheit aufweisen, und wobei von den Sensoreinheiten Sensordaten erfasst und über ein Funknetz an eine Zentraleinheit übermittelt werden, und wobei im Funknetz in regelmäßigen, zeitlichen Abständen ein Kennsignal ausgesendet wird, dass ein Empfang des Kennsignals in einer jeweiligen Sensoreinheit überwacht wird, dass bei Empfang eines charakteristischen Zeitmerkmal des Kennsignals jeweils ein aktueller Wert der internen Zeiteinheit der jeweiligen Sensoreinheit mit zumindest einer im Kennsignal enthaltene Senderidentifikation gespeichert wird, dass bei Erfassen von Sensordaten ein weiterer, aktueller Wert der internen Zeiteinheit der jeweiligen Sensoreinheit gespeichert wird, dass den erfassten Sensordaten zumindest der bei Empfang des charakteristischen Zeitmerkmals des Kennsignals gespeicherte Wert der internen Zeiteinheit, die zugehörige Senderidentifikation des Kennsignals, und der weitere, bei Erfassen der Sensordatengespeicherte Wert der internen Zeiteinheit zugeordnet werden und gemeinsam mit den Sensordaten an die Zentraleinheit übertragen werden, und dass anhand der Senderidentifikation eine Bezugszeitbasis und anhand des bei Empfang des charakteristischen Zeitmerkmals des Kennsignals gespeicherten Werts der internen Zeiteinheit der jeweiligen Sensoreinheit und des beim Erfassen der Sensordaten weiteren, gespeicherte Werts der internen Zeiteinheit der jeweiligen Sensoreinheit eine zeitliche Relation der übertragenen Sensordaten der jeweiligen Sensoreinheit zur Bezugszeitbasis abgeleitet werden, wobei die Zentraleinheit Spannungs- und Phasenwerte von zumindest einem der drei Phasenleiter eines Energieversorgungsnetzes erfasst, aus welchen Synchronisierungs-Daten zur Frequenz oder Periodendauer, sowie zur Phasenlage der Spannung zumindest eines der drei Phasenleiter in Bezug auf den Erfassungszeitpunkt der Spannungs- und Phasenwerte des zumindest einen der drei Phasenleiter ermittelt und an die Sensoreinheiten übermittelt werden, und die jeweilige Sensoreinheit die jeweiligen Sensordaten in Form von Stromwerten in Bezug auf die Synchronisierungs-Daten erfasst, welche Sensordaten an die Zentraleinheit übertragen werden, und in der Zentraleinheit aus den Spannungswerten und Stromwerten Leistungen berechnet werden.

Dadurch wird eine synchrone Leistungsmessung mithilfe funkbasierter Strommess-Sensoren und einer gemeinsamen zentralen Spannungserfassungs-Einheit ermöglicht, was eine flexible und effiziente nachträgliche Installation und Erweiterung von Geräten zu Überwachung elektrischer Energieverteilnetze ohne einen erhöhten Verkabelungsaufwand erlaubt.

Die synchrone Messung der Leistung des Verbraucher-Systems erlaubt eine besonders präzise Messung auf einfache Weise.

Es ist klar, dass die Berechnung von Leistungen in der Zentraleinheit aus den Spannungswerten und Stromwerten unter Einbeziehung deren jeweiliger Phasenlage erfolgt.

Dies wird erreicht, indem die Spannungen im Energieversorgungsnetz nur an einer Stelle gemessen werden und die Ströme an mehreren verteilten Stellen erfasst werden.

Dies ist in der Praxis weniger aufwändig, als an verteilten Orten zusätzlich Spannungen zu erfassen, da ein höherer Absicherungsaufwand erforderlich wäre und darüber hinaus die Überspannungsproblematik zusätzlich gelöst werden müsste.

Zudem sind bei der genannten dezentralen Wirk- und Blindleistungsmessung keine zusätzliche Synchronisierungsquelle und keine zusätzliche Verkabelung notwendig.

Die Synchronisierung kann beispielsweise so erfolgen, indem eine Zeitbasis eines führenden Zeitgebers innerhalb der Zentraleinheit mit einer entsprechend folgenden Zeitbasis der jeweiligen Sensoreinheit abgestimmt wird.

Der durch die Sensoreinheit fließende Strom kann außerdem zu deren Energie-Versorgung verwendet werden, was eine besonders einfache nachträgliche und wartungsarme Integration in ein bestehendes System erlaubt.

Unter dem Kennsignal kann beispielsweise ein Synchronisierungs-Rahmen einer Nachricht, insbesondere eine Nachricht an mehrere Empfänger ("multicast") angewendet werden.

In zumindest einer oder allen Sensoreinheiten werden in der aktuellen Messperiode anhand der übermittelten Werte für den Null-Punktdurchgang und der Periodendauer, und des optionalen Werts für den Null-Punktdurchgang der vorhergehenden Periode synchron Null-Punkt-Durchgangszeitpunkte der Referenzspannung in der Zentraleinheit bestimmt und auf der Basis der Wechselstromwerte zunächst Stromzeiger für jede einzelne Spannungs-Grundschwingungsperiode innerhalb der aktuellen Messperiode gebildet.

In einer Weiterbildung der Erfindung ist es vorgesehen, dass die Synchronisierungs-Daten betreffend die Phasenlage der Spannung zumindest eines der drei Phasenleiter in Bezug auf den Erfassungszeitpunkt der Spannungs- und Phasenwerte des zumindest einen der drei Phasenleiter durch den Zeitpunkt der Übermittlung von der Zentraleinheit an die jeweilige Sensoreinheit gebildet sind.

Dadurch können auf besonders einfache Weise Synchronisationsdaten für eine Kompensation der Verzögerung ermittelt und übertragen werden.

In einer Weiterbildung der Erfindung ist es vorgesehen, dass die Synchronisierungs-Daten mithilfe des Kennsignals an die Sensoreinheiten übermittelt werden.

Dadurch können auf besonders einfache Weise die Synchronisationsdaten für eine Kompensation der Verzögerung übertragen beziehungsweise kann eine Justierung der Zeitbasis in der Sensoreinheit durchgeführt werden.

In einer Weiterbildung der Erfindung ist es vorgesehen, dass die Synchronisierungs-Daten über mehr als eine Periode der Spannungs- und Phasenwerte der drei Phasen des Energieversorgungsnetzes ermittelt werden, bevorzugt aus zumindest zehn Perioden, besonders bevorzugt aus zumindest 100 Perioden.

Dadurch wird erreicht, dass der Funkkanal weniger belastet wird, weniger Daten übertragen werden und dennoch eine hinreichende Genauigkeit bei der Leistungsmessung im Energieversorgungsnetz erhalten wird.

In einer Weiterbildung der Erfindung ist es vorgesehen, dass die Zentraleinheit Spannungs- und Phasenwerte von einem Phasenleiter des Energieversorgungsnetzes und erste ergänzende Synchronisierungs-Daten zur Zeit-Verzögerung bei der Aussendung des Kennsignals erfasst, welche in einem vorhergehenden Zeitraum erfasst wurde, welche vor dem aktuellen Zeitraum liegt, in welchem die Synchronisierungs-Daten erfasst werden, und die ersten ergänzenden Synchronisierungs-Daten an die jeweilige Sensoreinheit übermittelt werden, bevorzugt mithilfe des Kennsignals, und die ersten ergänzenden Synchronisierungs-Daten bei der Erfassung der jeweiligen Sensordaten durch die jeweilige Sensoreinheit berücksichtigt werden.

Dadurch kann die Messgenauigkeit auf einfache Weise verbessert werden.

Außerdem können auf besonders einfache Weise Synchronisationsdaten für eine Kompensation der Verzögerung ermittelt und übertragen werden.

Die ersten ergänzenden Synchronisierungs-Daten sind der Wert der Zeit-Verzögerung im vorhergehenden Messzyklus.

Zunächst werden die Synchronisierungsdaten in Form des Nullpunkt-Durchgangs-Zeitpunkts in der zentralen Kontroll-Vorrichtung sowie die Periodendauer im Phasenleiter übertragen.

Erst anschließend wird am Anfang der nächsten, nachfolgenden Messperiode im Nachhinein die erfasste Verzögerung der Aussendung des Synchronisations-Rahmens angibt.

Bei dem genannten Phasenleiter des Energieversorgungsnetzes handelt es sich um einen ausgewählten Referenzleiter der drei Phasenleitungen, welcher als Referenz für die Phasenlagen der weiteren Phasenleiter gilt.

In einer Weiterbildung der Erfindung ist es vorgesehen, dass die Zentraleinheit ferner eine interne zentrale Zeiteinheit aufweist, deren Wert zweite ergänzende Synchronisierungs-Daten bildet, und die zweiten ergänzenden Synchronisierungs-Daten an die jeweilige Sensoreinheit übermittelt werden, bevorzugt mithilfe des Kennsignals, und die zweiten ergänzenden Synchronisierungs-Daten bei der Erfassung der jeweiligen Sensordaten durch die jeweilige Sensoreinheit berücksichtigt werden.

Dadurch kann die Messgenauigkeit auf einfache Weise verbessert werden.

Außerdem können auf besonders einfache Weise Synchronisationsdaten für eine Kompensation der Verzögerung ermittelt und übertragen werden.

In einer Weiterbildung der Erfindung ist es vorgesehen, dass die Stromwerte der jeweiligen Sensoreinheit zu aggregierten Stromwerten aggregiert werden, und die aggregierten Stromwerte an die Zentraleinheit übertragen werden, und in der Zentraleinheit aus den Spannungswerten und den aggregierten Stromwerten Leistungen berechnet werden.

Dadurch kann die Datenmenge der Übertragung von der jeweiligen Sensoreinheit an die Zentraleinheit reduziert werden und der Übertragungskanal entsprechend effizient genutzt werden.

Die erfindungsgemäße Aufgabe wird auch durch ein verteiltes System zur Zeitsynchronisation von Sensoreinheiten gelöst, umfassend ferner eine Zentraleinheit, wobei das System dazu eingerichtet ist, das erfindungsgemäße Verfahren auszuführen.

In den nachfolgenden Figuren wird die Erfindung anhand von Ausführungsbeispielen näher erläutert. Die Figuren zeigen in
Fig. 1 ein Beispiel für ein Energieverteilungsnetz,
Fig. 2 ein erstes Ausführungsbeispiel der Erfindung in Form eines Blockschaltbildes,
Fig. 3 ein zweites Ausführungsbeispiel der Erfindung in Form eines Blockschaltbildes,
Fig. 4 ein drittes Ausführungsbeispiel der Erfindung in Form eines Blockschaltbildes,
Fig. 5 eine Detailansicht der Zentral-Einheit der Erfindung,
Fig. 6 ein Beispiel für einen Signalverlauf im Energieverteilungsnetz.

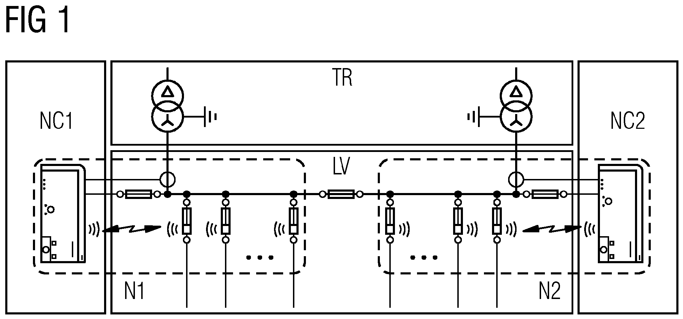

Fig. 1 zeigt ein Beispiel für ein Energieverteilungsnetz in Form eines "Einlinien"-Schaltbildes.

Die Linien repräsentieren dabei 3-, 4- oder 5-leiter-Verbindungen einzelner Abzweige im Niederspannungs- und Mittelspannungsbereich (übliche Bezeichnungen sind L1, L2, L3 oder L1, L2, L3, PEN/E oder L1, L2, L3, N und PE/E).

Eine Sensoreinheit und/oder eine Zentraleinheit können in jedem der angeführten Leiter als auch in den Mittelspannungsabzweigen/Bereich installiert werden.

In einer sogenannten Ortsnetzstation erfolgt die Umsetzung einer Hochspannung mithilfe eines oder mehrerer Transformatoren TR in einen Niederspannungs-Bereich LV.

Zentraleinheiten sind mit jeweilig zugeordneten Sensoreinheiten über jeweilige drahtlose Netzwerke N1, N2 verbunden, welche über entsprechend zugeordnete Netzwerk-Kontroll-Vorrichtungen NC1, NC2 gesteuert werden.

Eine Sensoreinheit dient zur Erfassung von Strömen in den Phasenleitern einzelner Abzweige zu Endverbrauchern.

In der Sensoreinheit, die als NH-Sicherungssätze oder beispielsweise in den Mittelspannungsleitungen/-abzweigen installiert sind, werden Stromzeiger, also komplexe Werte für die jeweiligen Ströme als Stromwerte beziehungsweise Sensordaten erfasst, wobei für die ermittelten Ströme optional ein Mittelwert gebildet wird und dieser übertragen wird.

Es können sogenannte zeitsynchronisierte Stromzeiger angewandt werden, welche zu einem bestimmten Zeitpunkt synchron mit Spannungszeigern erfasst werden.

Bei den Strömen können die Mittelwerte der Stromzeiger oder Strombeträge/-amplituden oder Stromeffektivwerte verwendet werden, da die Mittelwerte der Wechselströme häufig nahe Null sind.

In der Zentraleinheit werden Spannungszeiger, also komplexe Werte für die jeweiligen Spannungen als Spannungswerte erfasst, wobei für die ermittelten Spannungen optional ein Mittelwert gebildet wird.

Es können sogenannte zeitsynchronisierte Spannungszeiger angewandt werden, welche zu einem bestimmten Zeitpunkt synchron mit Stromzeigern erfasst werden.

Bei den Spannungen können die Mittelwerte der Spannungszeiger oder Spannungsbeträge/- amplituden oder Spannungseffektivwerte verwendet werden, da die Mittelwerte der Wechselspannungen häufig nahe Null sind.

In der Zentraleinheit werden die gemittelten Stromzeiger von einer oder mehreren Sensoreinheiten über eine Nahfunkkommunikation (wie beispielsweise "Zigbee" oder Bluetooth) empfangen.

Unter Einbeziehung der zugehörigen gemittelten Spannungszeiger wird in der Zentraleinheit die Wirk- und Blindleistung P und Q in den jeweiligen Phasenleitungen berechnet.

Unter Zeigern für Strom oder Spannung werden jeweilige komplexe Werte verstanden, also Betragswerte und Phasenwerte für den Strom oder die Spannung.

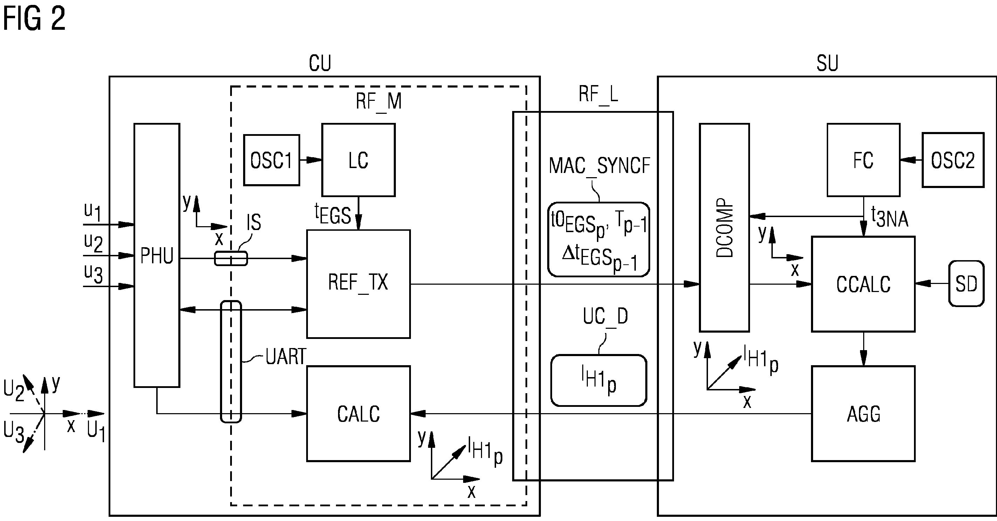

**Fig. 2** zeigt ein erstes Ausführungsbeispiel der Erfindung in Form eines Blockschaltbildes.

Eine Zentraleinheit CU umfasst eine Vorrichtung zur Referenz-Phasen-Übertragung PHU, welche dazu dient:
- Eine Erkennung eines Null-Durchgangs bei einem Spannungsverlauf,
- eine Berechnung von Spannungen mit Betrags- und Phasen-Informationen, also Spannungszeiger,
- ein Zählen von Messperioden p einer jeweiligen Referenzspannung U_{REF_H1}, ausgewählt aus den Netz-Spannungen u1, u2, u3, welche vorzugsweise Phasenspannungen sind,
- eine Bestimmung eines Referenz-Leiters LREF von Netzphasen-Leitern L1, L2, L3 eines Energieversorgungs-Netzes,
- eine Bestimmung einer Phasen-Abfolge von Netz-Spannungen u1, u2, u3 in Form von Spannungs-Zeigern U1, U2, U3 der Netz-Spannung.

Als Messperiode p kann eine Periode angesehen werden, die auch mehr als eine Netzspannungsperiode dauern kann, welche auch als Spannungs-Grundschwingungs-Perioden bezeichnet werden können, die dann dementsprechend gezählt werden.

Oft wird die Spannungsgrundschwingung als 1. Harmonische oder abgekürzt als "H1" der Netzspannung bezeichnet.

Die Daten der Vorrichtung zur Referenz-Phasen-Übertragung PHU wird mithilfe eines Senders beziehungsweise Empfängers UART, oder über eine interne Schnittstelle, wie eine serielle Schnittstelle, in der Zentraleinheit CU an ein Hochfrequenz-Modul RF_M entsprechend verteilt.

Ein Interrupt-Signal IS für den Null-Durchgang der Referenzspannung U_{REF_H1} wird einem Referenz-Signal-Sender REF_TX innerhalb des Hochfrequenz-Moduls RF_M bereitgestellt, welcher wiederum eine Information bezüglich einer Zeit-Verzögerung Δt_{EGS} von einem zentralen Oszillator OSC1 und einer verbundenen anführende Zähler-Vorrichtung LC erhält.

Die Zeit-Verzögerung Δt_{EGS} zu Beginn einer Messperiode p ist eine Verzögerung zwischen dem Zeitpunkt t0_{EGSp} der Aktivierung des Interrupt-Signals IS, also für den Null-Durchgang der Referenzspannung U_{REF_H1}, und dem Zeitpunkt t_{EGS_SYNCp} des Aussendens vom Synchronisations-Rahmen MAC_SYNCF an die jeweilige Sensoreinheit SU.

Die beiden Zeitpunkte t0_{EGSp} und t_{EGS_SYNCp}, sowie die Verzögerung Δt_{EGS} werden im Hochfrequenz-Modul RF_M auf Basis der Zeitinformation t_{EGS} ermittelt, welche der

Oszillator OSC1 und eine verbundene anführende Zähler-Vorrichtung LC bereitstellen.

Im Synchronisations-Rahmen MAC_SYNCF werden Informationen über die Periodendauer Tₚ₋₁, also eine geschätzte aktuelle Spannungsperiode, die anhand der letzten beispielsweise 10 bis 30 Spannungsperioden der vorhergehenden Messperiode p-1 ermittelt wurde, und die Zeitverzögerung Δt_{EGSp-1}, welche zu Beginn der vorhergehenden Messperiode p-1, aber nach dem Aussenden vom Synchronisations-Rahmen MAC_SYNCF ermittelt wurde, sowie der Zeitpunkt t0_{EGSp} der Aktivierung des Interrupt-Signals IS, also für den Null-Durchgang der Referenzspannung U_{REF_H1}, als Wert vom führenden Zähler LC übertragen.

Der Beginn der Aussendung des SYNC-Frames entspricht implizit dem Zeitpunkt t_{EGS_SYNCp} = t0_{EGSp} + Δt_{EGSp}.

Die Information über die Zeitverzögerung Δt_{EGSp} entsteht in dem Ausführungsbeispiel erst nach dem Aussenden des Synchronisations-Rahmens MAC_SYNCF und wird mit dem nächsten Synchronisations-Rahmen MAC_SYNCF zu Beginn der Messperiode p+1 an die jeweilige Sensoreinheit SU übertragen.

Erst dann, also einen Messzyklus später, ist die Kompensation der Zeitverzögerung Δt_{EGSp} für die Messperiode p möglich.

Das Hochfrequenz-Moduls RF_M stellt auch eine Berechnungs-Vorrichtung CALC zur Berechnung von Wirk- und Blindleistung P und Q aus entsprechenden Spannungen/ Spannungszeigern und Strömen/ Stromzeigern bereit.

Über eine Hochfrequenz-Übertragungsstrecke RF_L erfolgt die drahtlose Übertragung von Synchronisations-Informationen zu einer oder mehreren Sensoreinheiten SU, sowie die Übertragung von erfassen Sensordaten von den Sensoreinheiten SU zur Zentraleinheit CU, beispielsweise in Form einer "unicast"-Datenübertragung UC_D, wie weiter unter näher beschrieben.

Die Sensoreinheiten SU sind jeweils lokale Kontroll-Vorrichtungen zur Daten-Erfassung durch entsprechende Sensor-Vorrichtungen.

Die Hochfrequenz-Übertragungsstrecke RF_L kann einen Synchronisations-Rahmen MAC_SYNCF mittels MAC-Layer-basiertem "Multicast" des Synchronisations-Rahmens übermitteln.

Die Sensoreinheit SU weist eine Kompensations-Vorrichtung DCOMP für die Zeit-Verzögerung Δt_{RF_L} in der Hochfrequenz-Übertragungsstrecke RF_L auf, sowie einen lokalen Oszillator OSC2 und eine verbundene folgende Zähler-Vorrichtung FC, welche eine Zeitinformation t_{3NA} bereitstellen.

Die Zeit-Verzögerung Δt_{RF_L} berücksichtigt auch die Zeit-Verzögerung im Empfänger innerhalb der Sensoreinheit SU bis zur Kompensations-Vorrichtung DCOMP.

Die Zeit t_{3NA} ist der lokale Wert des folgenden Zählers FC in der lokalen Kontroll-Vorrichtung, also der Sensoreinheit SU.

Es erfolgt in der Sensoreinheit SU eine Synchronisation der Erfassung von Strom-Zeigern mit dem Null-Durchgang der Referenzspannung U_{REF_H1} in der Zentraleinheit CU.

Nach der Kompensation der Zeit-Verzögerung der Hochfrequenz-Übertragungsstrecke RF_L in der Kompensations-Vorrichtung DCOMP entsprechen die Empfangszeitpunkte t0_{3NAp} und t0_{3NAp+1}, der Synchronisations-Rahmen MAC_SYNCF am Beginn der Messperioden p und p+1 den entsprechenden Sendezeitpunkten t_{EGS_SYNCp} und t_{EGS_SYNCp+1} in der Zentraleinheit CU.

Anhand des am Beginn der Messperiode p übermittelten Zeitpunktes t0_{EGSp} und der am Beginn der Messperiode p+1 übermittelten Zeitpunktes t0_{EGSp+1} und den Informationen über die Zeitverzögerung Δt_{EGSp} und die Periodendauer Tₚ wird in der Sensoreinheit SU zunächst der Zeitpunkt t0_{EGSp+1} des Null-Durchgangs der Referenzspannung U_{REF_H1} als Zeitpunkt t0_{EGSp+1}* = t0_{3NAp} + t0_{EGSp+1} - t0_{EGSp} - Δt_{EGSp} geschätzt, der dem geschätzten Wert vom folgenden Zähler FC in der Sensoreinheit SU zum Zeitpunkt t0_{EGSp+1} in der Zentraleinheit CU entspricht.

Dann wird der Null-Durchgangszeitpunkt der nächsten Periode der Referenzspannung U_{REF_H1} als Zeit t0_{3NAi+101} = t0_{EGSp+1}* + Tₚ bestimmt.

Die Zeiten mit dem Index * deuten auf einen geschätzten Wert hin und entsprechen dem folgenden Zähler FC.

Die Zeiten mit dem Index 3NA entsprechen Zeiten in der Sensoreinheit SU und werden durch den folgenden Zähler FC gebildet.

Die Zeiten mit dem Index EGS entsprechen Zeiten in der Zentraleinheit CU und werden durch den führenden Zähler LC gebildet.

Die eigentliche Strommessung bzw. Strom-Zeiger Ermittlung in der Messperiode p+1 beginnt in der Sensoreinheit SU mit dem Zeitpunkt t0_{3NAi+101}.

Sensordaten SD werden von der Sensoreinheit SU in Form von Strom-Werten I erfasst, verarbeitet und als Strom-Zeiger-Werte berechnet, und anschließend optional an eine Aggregations-Vorrichtung AGG zur Verarbeitung übergeben.

Sensor-Daten SD können beispielsweise Wechselstromwerte des Primär-Stroms in einem Energieversorgungsnetz sein.

Unter einer Aggregation kann beispielsweise eine Mittelwertbildung über mehrere Messwerte, beispielsweise über mehrere Wechselstromperioden innerhalb einer Messperiode, verstanden werden, wobei auch andere statistische Methoden zur Abbildung von Messwerten geeignet sein können.

Im Synchronisations-Rahmen oder Frame MAC_SYNCF werden Informationen zu dessen Sende-Zeitpunkt in Form einer Zählerstanddifferenz Δt_{EGS_{P}} per "multi-cast"-Übertragung an die Sensoreinheit SU übertragen, sowie die Periodendauer Tₚ₋₁ des Spannungsverlaufs U_{REF_H1} aus der vorigen Periode p-1, und der Zeitpunkt t0_{EGSp} der Aktivierung des Interrupt-Signals IS, also für den Null-Durchgang der Referenzspannung U_{REF_H1}, als Wert t0_{EGSp} vom führenden Zähler LC mitübertagen.

Von der Sensoreinheit SU werden Informationen zu den erfassten Sensordaten SD in Form von Werten zum komplexen Stromzeiger I_{H1p} zur Periode mit Index p, sowie der Stromzeiger I_{H1p}, je nach Ausführung als Einzelwert oder als aggregierter Wert, per "uni-cast"-Übertragung an die Zentraleinheit CU übertragen.

In der Zentraleinheit CU werden für jede Periode i (der Grundschwingung) der Netzwechselspannung u₁, u₂, und u₃ eines 3-Phasensystems Spannungszeiger U1ᵢ, U2ᵢ bzw. U3ᵢ gebildet.

Auch die Spannungszeiger können optional aggregiert werden.

Die Spannungen u₁, u₂, und u₃ können beispielsweise Spannungen an Phasenleitern L₁, L₂, bzw. L₃ eines Energieversorgungsnetzes sein.

Eine der Spannungen, wie beispielsweise u₁, wird als Referenzspannung U_{REF_H1} ausgewählt.

Für jeden Messzyklus p, welcher beispielsweise aus 100 Grundschwingungsperioden der Referenzspannung U_{REF_H1} umfasst, wird ein Null-Punktdurchgangszeitpunkt t0_{EGSp} der Referenzspannung U_{REF_H1} bestimmt, welches phasensynchron mit dem Beginn der ersten Grundschwingungsperiode der Referenzspannung U_{REF_H1} ist und sich auf den in der Zentraleinheit CU vorhandene Mikrosekundenzähler in Form des führenden Zählers LC mit der Zeit t_{EGS} bezieht.

Der Nullpunkt-Durchgangs-Zeitpunkt t0_{EGSp} bezieht sich auf den aktuellen Zeitpunkt in der zentralen Kontroll-Vorrichtung, während sich der Nullpunkt-Durchgangs-Zeitpunkt t0_{EGSₚ₋₁} auf den ersten Nullpunkt-Durchgangs-Zeitpunkt der vorhergehenden Messperiode bezieht.

Zusätzlich wird die aktuelle Netzspannungs-Periodendauer Tₚ bestimmt.

Als zusätzliche Information kann optional auch der Zeitpunkt in Form eines Differenzzählerstands Δt_{EGS_{P-1}} bestimmt werden, nachdem die Werte für den Zählerstand Δt_{EGS_{P-2}} und die Periodendauer Tₚ₋₂ (in der Figur nicht dargestellt) in der vorhergehenden Messperiode p-1 an die Sensoreinheit SU mittels eines Kennsignals, dem sogenannten SYNC-Frames MAC_SYNCF, übermittelt wurden.

Der Zeitpunkt Δt_{EGS_{P-1}} dient zur Korrektur der zeitlichen Synchronität zwischen der Zentraleinheit CU und zumindest einer Sensoreinheit SU in der aktuellen Messperiode p.

Neben dem Nullpunkt-Durchgangs-Zeitpunkt t0_{EGSₚ}, der Periodendauer Tₚ und der optionalem Zählerstandsdifferenz Δt_{EGS_{P-1}} enthält der Synchronisations-Rahmen beziehungsweise "SYNC-Frame" MAC_SYNCF, welcher den Beginn der Messperiode p einleitet, auch die Nummer von der Messperiode p selbst, die Nummer i der ersten Grundschwingungsperiode der Referenzspannung U_{REF_H1} in dieser Messperiode und eine Netzwerkquelladresse der Zentraleinheit CU, die als Senderidentifikation im SYNC-Frame MAC_SYNCF dient.

Die Messperiode wird auf Basis eines Grundschwingungsperioden-Zählers festgelegt, beispielsweise in Form einer Zeiteinheit.

In zumindest einer oder auch allen Sensoreinheiten SU werden in der Messperiode p auf Basis der übermittelten Werte für die Nullpunkt-Durchgangs-Zeitpunkte t0_{EGSₚ} und t0_{EGSₚ₋₁} in der zentralen Kontroll-Vorrichtung CU, der aktuellen Periodendauer Tₚ, und des optionalen Zeitpunkts der Abweichung der Zeit-Verzögerung Δt_{EGS_{P-1}} synchron Null-Punkt-Durchgangszeitpunkte der Referenzspannung U_{REF_H1} in der Zentraleinheit CU bestimmt, wobei diese Zeitpunkte Werten des jeweiligen führenden Zählers LC entsprechen.

Auf Basis von Sensordaten SD in Form von Wechselstromwerten wird der Stromzeiger I_{H1i} für jede einzelne Oberschwingungsperiode i innerhalb der Messperiode p gebildet, und entweder einzeln oder als über die Messperiode p aggregierter Stromzeiger I_{H1p} an die Zentraleinheit CU in einem Sensor-Datenframe mit Sensordaten SD übermittelt.

In demselben Sensordatenframe können beispielsweise auch der Zeitstempel t_{3NA} der jeweiligen Sensoreinheiten SU, eine Nummer i der ersten Grundschwingungsperiode der Referenzspannung U_{REF_H1} in der Messperiode p und optional die Nummern der aktuellen Messperiode p und/oder der vorhergehenden Messperioden p-1, p-2 enthalten sein.

Nach dem Empfang der Sensordaten SD in der Zentraleinheit CU werden die zugehörigen, synchron erfassten Spannungs- und Stromzeiger verwendet, um die Wirk- und Blindleistungswerte Pₚ und Qₚ zu berechnen.

Mit anderen Worten wird im Ausführungsbeispiel der Fig. 2 der Sendezeitpunkt des SYNC-Frames MAC_SYNCF als Anfang vom SYNC-Frames-"Header" MAC_SYNCF und zusätzlich als Zählerstand(s-Differenz) des Zählers LC der Zentraleinheit CU über den Referenz-Signal-Sender REF_TX bereitgestellt, vorzugsweise entsprechend einer Zeit-Auflösung im Mikrosekunden-Bereich.

Im folgenden SYNC-Frame MAC_SYNCF wird somit der Null-Punktdurchgang t0_{EGSp} als Anfang vom Synchronisations-Rahmen MAC_SYNCF und als aktueller Zählerstand zum Zeitpunkt t0_{EGSp} des Null-Punktdurchgangs und die Differenz der Zählerstände Δt_{EGSp-1} zwischen dem vorhergehenden Referenz-Null-Punktdurchgang und dem vorhergehenden Sendezeitpunkt übertragen.

Die Signallaufzeit im vorliegenden Ausführungsbeispiel wird somit in der jeweiligen Sensoreinheit SU zum Beginn der aktuellen Messperiode p korrigiert, indem aus dem vorhergehenden SYNC-Frame MAC_SYNCF der Messperiode p-1, den Null-Punktdurchgang t0_{EGSₚ₋₁} und aus dem aktuell empfangenen SYNC-Frame MAC_SYNCF den Null-Punktdurchgang t0_{EGSₚ} aus der aktuellen Messperiode p und die Sendeverzögerung Δt_{EGS_{P-1}} herangezogen wird.

Es kann die Zeitverzögerung Δt_{RF_L} bei der Kompensation durch die DCOMP berücksichtigt werden, welche jedoch sehr klein ist, und der Einfachheit halber auch vernachlässigt werden kann.

Es sind in diesem Fall daher immer zwei aufeinanderfolgende SYNC-Frames notwendig, um in der Sensoreinheit SU den Null-Punktdurchgang der Referenzspannung U_{REF_H1} zu ermitteln.

Das erste Ausführungsbeispiel kann daher auch mit folgenden Worten beschrieben werden.

Das Verfahren zur Zeitsynchronisation von Sensoreinheiten in einem verteilten System dient zur Bestimmung von Blind und Wirkleistung in der Zentraleinheit CU mit zumindest einer Sensoreinheit SU und basiert auf einer Synchronisation des Nullpunktdurchgangs der Referenzspannung zwischen der Zentraleinheit CU mit einer Sensoreinheit SU, also zwischen dem ersten, führenden Zähler LC mit einem ersten, zentralen Oszillator OSC1 der Zentraleinheit CU und einem zweiten, folgenden Zähler FC mit einem zweiten, lokalen Oszillator OSC2 des jeweiligen Sensoreinheit SU.

Dabei werden die Anfangszeitpunkte und der darauffolgende zeitliche Verlauf für die Berechnung von Stromzeigern in der Sensoreinheit SU mit Zeitpunkten des Nulldurchgangs der Spannungsgrundschwingung synchronisiert.

Dies entspricht einer Zeitsynchronisierung zwischen der Zentraleinheit CU und der Sensoreinheit SU, also einer Abstimmung zwischen der Zeitbasis t_{EGS} eines führenden Zeitgebers oder Zählers LC innerhalb der Zentraleinheit CU mit einer entsprechend folgenden Zeitbasis t_{3NA} eines internen, führenden Zählers FC der jeweiligen Sensoreinheit SU.

Es muss sich nicht um eine absolute Uhrzeit handeln, sondern kann sich auf die einzelnen Spannungsgrundschwingungsperioden und/oder auf die Taktperioden der jeweiligen Zähler LC, FC beziehen.

Die Sensoreinheiten SU weisen jeweils eine interne Zeiteinheit FC auf, wobei diese internen Zähler als Zeiteinheiten dienen, die eine Zeitbasis erzeugen basierend auf den nummerierten Netzspannungsperioden und/oder in einer Zeiteinheit (t_{3NA}) auf Mikrosekunden-Basis.

Von den Sensoreinheiten SU werden Sensordaten SD in Form von Stromzeigern mit einer vorgegebenen zeitlichen Auflösung von beispielsweise 1 Mikrosekunde periodisch erfasst, und/oder mit Netzspannungsperiodennummer versehen, und über ein Funknetz RL_L an die Zentraleinheit CU übermittelt.

Im Funknetz beziehungsweise an der Hochfrequenz-Übertragungsstrecke RF_L wird in regelmäßigen, zeitlichen Abständen ein Kennsignal ausgesendet, beispielsweise alle zwei Sekunden ein SYNC-Frame MAC_SYNCF von der Zentraleinheit CU an die jeweilige Sensoreinheit SU.

Der Empfang des Kennsignals SYNC-Frame MAC_SYNCF wird in einer jeweiligen Sensoreinheit SU überwacht.

Bei Empfang eines charakteristischen Zeitmerkmal des Kennsignals wird jeweils ein aktueller Wert der internen Zeiteinheit FC der jeweiligen Sensoreinheit SU mit zumindest einer im Kennsignal enthaltene Senderidentifikation gespeichert, also die darin enthaltenen Daten, wie die Quelladresse und/oder Authentisierungsdaten vom RF-Modul RF_M in der Zentraleinheit CU, der darin enthaltenen charakteristischen Zeitmerkmale wie Zeitstempel, Zeitverzögerungs-Information, Nummer der jeweiligen Netzspannungsperiode, etc., und einen aktuellen Wert der eigenen Zeiteinheit der jeweiligen Sensoreinheit SU, beispielsweise aus dem Empfangszeitstempel des SYNC-Frames MAC_SYNCF.

Beim Erfassen von Sensordaten SD wird ein weiterer, aktueller Wert der internen Zeiteinheit FC der jeweiligen Sensoreinheit SU gespeichert, beispielsweise wird jeweils ein aktueller Zeitstempel der Zeiteinheit der jeweiligen Sensoreinheit SU als auch die Nummer der jeweiligen Netzspannungsperiode zugeordnet und mit diesen Sensordaten SD gespeichert.

Der Nulldurchgang wird daher auf die lokale Zeiteinheit im Sensor synchronisiert, wobei nur der Nulldurchgang im Sensor möglichst genau reproduziert werden soll, und ein Bezug zur Zeiteinheit in der Zentraleinheit nicht notwendig ist.

Den erfassten Sensordaten SD wird zumindest der bei Empfang des charakteristischen Zeitmerkmals des Kennsignals gespeicherte Wert der internen Zeiteinheit FC, die zugehörige Senderidentifikation des Kennsignals MAC_SYNCF, und der weitere, bei Erfassen der Sensordaten SD gespeicherte Wert der internen Zeiteinheit zugeordnet und gemeinsam mit den Sensordaten SD an die Zentraleinheit CU übertragen.

Dies kann über das Datentelegramm, welches von der jeweiligen Sensoreinheit SU an die Zentraleinheit CU gesendet wird, erfolgen, welches die Nummer der Netzspannungsperiode, auf welche sich die Messdaten beziehen, sowie die zugehörige Adresse von der Zentraleinheit CU, nämlich als Senderidentifikation des Kennsignals, an welche sie gesendet werden, und ein aktueller Zeitstempel der Zeiteinheit der jeweiligen Sensoreinheit SU, welcher beim Erfassen von Daten zugeordnet wird.

Anhand der Senderidentifikation wird eine Bezugszeitbasis und anhand des bei Empfang des charakteristischen Zeitmerkmals des Kennsignals gespeicherten Werts der internen Zeiteinheit FC der jeweiligen Sensoreinheit SU und des beim Erfassen der Sensordaten SD weiteren, gespeicherte Werts der internen Zeiteinheit FC der jeweiligen Sensoreinheit SU eine zeitliche Relation der übertragenen Sensordaten SD der jeweiligen Sensoreinheit SU zur Bezugszeitbasis abgeleitet, beispielsweise anhand der jeweiligen Netzperiodennummer aus dem empfangenen Datentelegramm und/oder des darin enthaltenen Zeitstempels.

Die Zentraleinheit CU erfasst Spannungs- und Phasenwerte von zumindest einem der drei Phasenleiter eines Energieversorgungsnetzes, aus welchen Synchronisierungs-Daten t0_{EGSp} und Tp zur Frequenz oder Periodendauer, sowie zur Phasenlage der Spannung zumindest eines der drei Phasenleiter in Bezug auf den Erfassungszeitpunkt der Spannungs- und Phasenwerte des zumindest einen der drei Phasenleiter ermittelt und an die Sensoreinheiten SU übermittelt werden.

Die jeweilige Sensoreinheit SU erfasst die jeweiligen Sensordaten SD in Form von Stromwerten in Bezug auf die Synchronisierungs-Daten t0_{EGSₚ} und Tₚ, welche an die Zentraleinheit CU übertragen werden.

In der Zentraleinheit CU werden aus den Spannungswerten und Stromwerten Leistungen, insbesondere Wirk- und Blindleistungen, berechnet.

Die Synchronisierungs-Daten t0_{EGSₚ} betreffend die Phasenlage der Spannung zumindest eines der drei Phasenleiter in Bezug auf den Erfassungszeitpunkt der Spannungs- und Phasenwerte des zumindest einen der drei Phasenleiter sind durch den Zeitpunkt der Übermittlung des SYNC-Frames MAC_SYNCF von der Zentraleinheit CU an die jeweilige Sensoreinheit SU gebildet.

Die Synchronisierungs-Daten t0_{EGSₚ}, Tₚ können mithilfe des Kennsignals MAC_SYNCF an die Sensoreinheiten SU übermittelt werden.

Die Synchronisierungs-Daten t0_{EGSₚ}, Tₚ können über mehr als eine Periode der Spannungs- und Phasenwerte der drei Phasen des Energieversorgungsnetzes ermittelt werden, bevorzugt aus zumindest zehn Perioden, besonders bevorzugt aus zumindest 100 Perioden.

Die Zentraleinheit CU kann ferner Spannungs- und Phasenwerte von einer Phasenleitung des Energieversorgungsnetzes und erste ergänzende Synchronisierungs-Daten Δt_{EGSₚ₋₁} erfassen, welche in einem vorhergehenden Zeitraum erfasst wurde, welche vor dem aktuellen Zeitraum liegt, in welchem die Synchronisierungs-Daten t0_{EGSₚ}, Tₚ erfasst werden.

Die ersten ergänzenden Synchronisierungs-Daten Δt_{EGSₚ₋₁} können an die jeweilige Sensoreinheit SU übermittelt werden, bevorzugt mithilfe des Kennsignals MAC_SYNCF.

Die ersten ergänzenden Synchronisierungs-Daten Δt_{EGSₚ₋₁} können bei der Erfassung der jeweiligen Sensordaten SD durch die jeweilige Sensoreinheit SU berücksichtigt werden.

Zur Verwendung der Zählerstandsdifferenz Δt_{EGS_{P-1}} ist es offensichtlich notwendig, dass die Synchronisierung periodisch erfolgt.

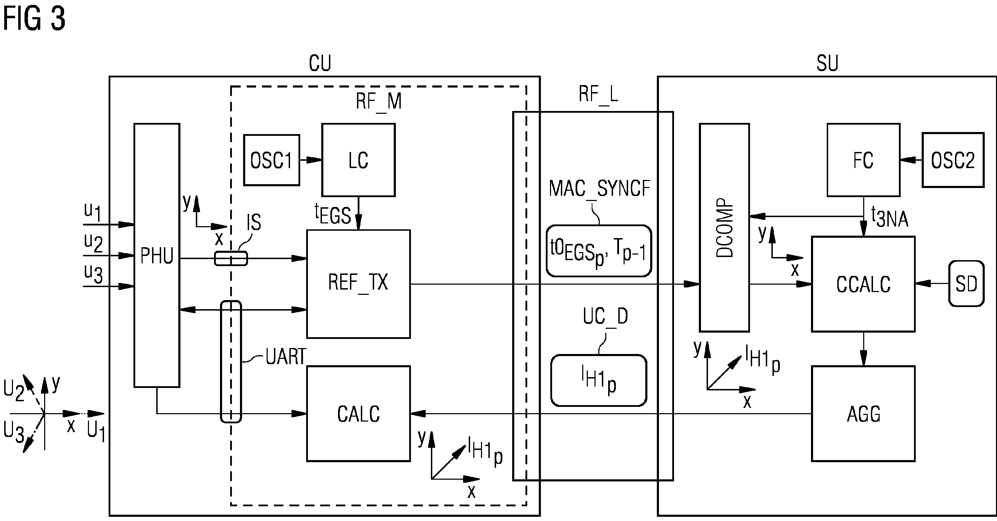

**Fig. 3** zeigt ein zweites Ausführungsbeispiel der Erfindung in Form eines Blockschaltbildes.

Die Information über die Zählerstandsdifferenz Δt_{EGS_{P-1}} im SYNC-Frame MAC_SYNCF der Messperiode p wird in diesem Ausführungsbeispiel nicht übertragen.

Es wird davon ausgegangen, dass die Aussendung des SYNC-Frames MAC_SYNCF in der Zentraleinheit CU und insbesondere im Sender REF_TX synchron mit Null-Punktdurchgangs-Zeitpunkt der Referenzspannung U_{REF_H1} erfolgt und lediglich die Laufzeitkorrektur für den Empfang des SYNC-Frame MAC_SYNCF in der Sensoreinheit SU erfolgt, um die zeitliche Synchronität zwischen der Zentraleinheit CU und den jeweiligen Sensoreinheiten SU herzustellen.

In diesem Ausführungsbeispiel wird beim Senden durch den Referenz-Signal-Sender REF_TX der Zentraleinheit CU ein Zählerstand übergeben, bei dem mit dem Aussenden des SYNC-Frames-Headers MAC_SYNCF begonnen werden soll.

Im Gegensatz zum ersten Ausführungsbeispiel ist die Zeit-Verzögerung Δt_{EGSp} zu Beginn einer Messperiode p zwischen dem Zeitpunkt t0_{EGSp} der Aktivierung vom Interrupt-Signal IS, also für den Null-Durchgang der Referenzspannung U_{REF_H1}, und dem Zeitpunkt t_{EGS_SYNCp} des Aussendens vom Synchronisations-Rahmen MAC_SYNCF an die jeweilige Sensoreinheit SU vernachlässigbar und muss daher nicht übertragen werden.

Im Synchronisations-Rahmen MAC_SYNCF wird lediglich als Information über die Periodendauer Tₚ₋₁ übertragen, also die geschätzte aktuelle Spannungsperiode, die beispielsweise anhand der letzten 10 bis 30 Spannungsperioden der vorhergehenden Messperiode p-1 ermittelt wurde.

Der Beginn der Aussendung des SYNC-Frames MAC_SYNCF entspricht implizit dem Zeitpunkt t_{EGS_SYNCp} ≈ t0_{EGSp}, da der Betrag der Verzögerung Δt_{EGSp} meist vernachlässigbar ist.

Das bedeutet, dass gleich zu Beginn desselben Messzyklus p die Kompensation der empfangsseitigen Zeitverzögerung des SYNC-Frames MAC_SYNCF für die Messperiode p und die Synchronisation zwischen der Zentraleinheit CU und der jeweiligen Sensoreinheit SU erfolgt.

Das Aussenden des SYNC-Frames MAC_SYNCF erfolgt von der Zentraleinheit CU, um eine Grundschwingungsperiode verzögert, genau synchron mit dem Null-Punktdurchgangs-Zeitpunkt der Referenzspannung U_{REF_H1}.

Mit dem Aussenden des SYNC-Frames MAC_SYNCF wird implizit die Information über den Zeitpunkt t0_{EGSₚ} übertragen.

Im SYNC-Frame MAC_SYNCF muss in diesem Beispiel sonst kein weiterer Zählerstand der Zentraleinheit CU übertragen werden.

Die RF-Empfängereinheit in der Sensoreinheit SU stellt den Zählerstand zum Empfangszeitpunkt des SYNC-Frames-Headers MAC_SYNCF zur Verfügung.

Mit dem Empfang des SYNC-Frames MAC_SYNCF zum Zeitpunkt t0_{EGSp} der jeweiligen Sensoreinheit entspricht die Zeit t0_{EGSp}* = t0_{3NAp}.

Die Signallaufzeit über die Hochfrequenz-Übertragungsstrecke RF_L im vorliegenden Ausführungsbeispiel wird in der jeweiligen Sensoreinheit SU korrigiert, indem der Null-Punktdurchgangszeitpunkt der Referenzspannung U_{REF_H1} direkt als korrigierter Empfangszeitpunkt des SYNC-Frame-Headers übernommen wird.

Bei diesem Verfahren kann in der Sensoreinheit SU aus jedem SYNC-Frame MAC_SYNCF der Null-Punktdurchgangs-Zeitpunkt der Referenzspannung U_{REF_H1} ermittelt werden.

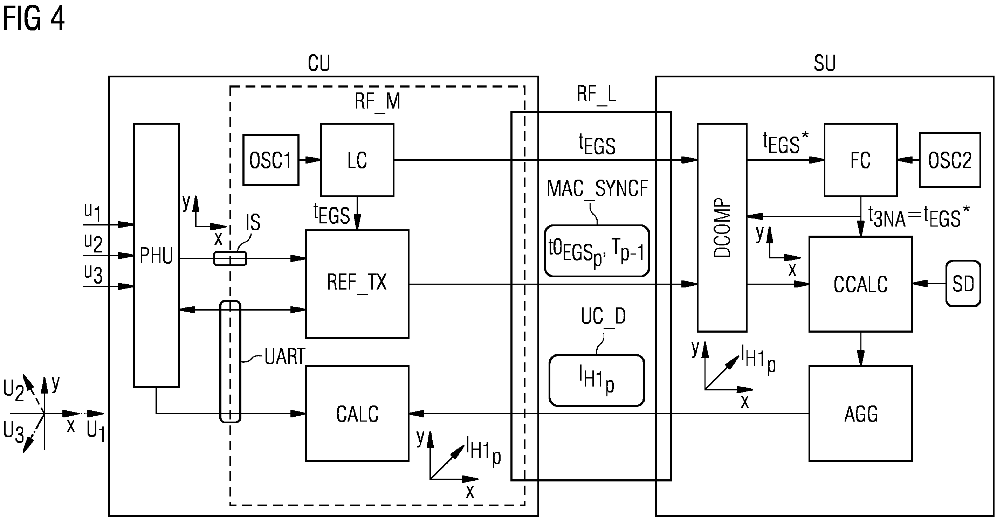

**Fig. 4** zeigt ein drittes Ausführungsbeispiel der Erfindung in Form eines Blockschaltbildes, bei welchem der Zeitwert t_{EGS} des Zählers in der Zentraleinheit CU mittels separater Zeitsynchronisierungs-Frames an die Sensoreinheit SU übertragen und nach einer Laufzeitkorrektur der Zeitbasis t_{3NA} in der Sensoreinheit SU durch den Wert t_{EGS} der Zeitbasis der Zentraleinheit CU übernommen wird.

Diese Korrektur von t_{3NA} = t_{EGS} ist möglich, indem separate Zeitsynchronisierungs-Frames in der Zentraleinheit CU vorab vorbereitet werden und an die Sensoreinheit SU zu den in den Frames enthaltenen Zeitpunkten ausgesendet werden.

Dies ermöglicht in der Zentraleinheit CU die vorher beschriebenen SYNC-Frames MAC_SYNCF zum Start jeder Messperiode p nicht synchron mit dem Null-Punktdurchgangs-Zeitpunkt t0_{EGSp} der Referenzspannung U_{REF_H1} zu senden, sondern innerhalb der ersten Periode der Referenzspannung U_{REF_H1}, da die Information über den Null-Punktdurchgangs-Zeitpunkt im Wert t0_{EGSp} enthalten wird, der sich sowohl auf die Zeit t_{EGS} als auch auf die laufend synchronisierte Zeitbasis t_{3NA} der Sensoreinheit SU bezieht.

Dadurch ist die Übertragung im SYNC-Frame MAC_SYNCF des Zeitpunkt-Wertes der Sendeverzögerung Δt_{EGS_{P-1}} nicht notwendig und der zeitliche Abstand zwischen dem Beginn der Messperiode p und dem bisherigen zeitlichen Referenzpunkt von t0_{EGSₚ₋₁} aus dem ersten Ausführungsbeispiel in der Figur 3 auf den Referenzpunkt von t0_{EGSp} verkürzt wird.

Mit anderen Worten kann die Zentraleinheit CU ferner eine interne, zentrale Zeiteinheit LC aufweisen, deren Wert zweite ergänzende Synchronisierungs-Daten t_{EGS} bildet, und die zweiten ergänzenden Synchronisierungs-Daten können an die jeweilige Sensoreinheit SU übermittelt werden, bevorzugt mithilfe des Kennsignals MAC_SYNCF, und die zweiten ergänzenden Synchronisierungs-Daten t_{EGS} können bei der Erfassung der jeweiligen Sensordaten SD durch die jeweilige Sensoreinheit SU berücksichtigt werden.

Die Stromwerte der jeweiligen Sensoreinheit SU können zu aggregierten Stromzeigern I_{H1p} aggregiert werden, und die aggregierten Stromzeiger I_{H1p} können an die Zentraleinheit CU übertragen werden, und in der Zentraleinheit CU aus den Spannungswerten und den aggregierten Stromzeigern I_{H1p} Leistungen berechnet werden.

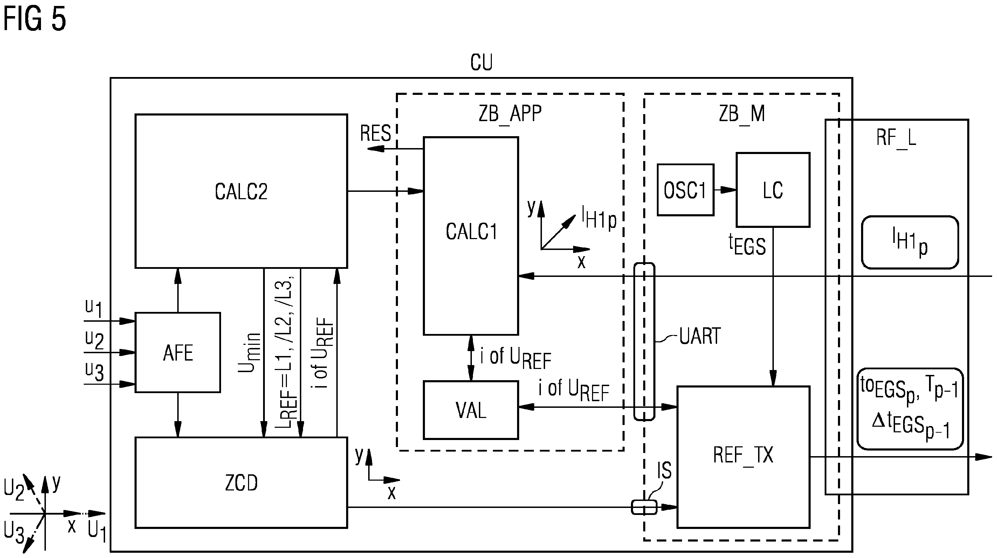

**Fig. 5** zeigt eine Detailansicht der Zentraleinheit CU der Erfindung.

Alle drei angeführten Ausführungsbeispiele können eingesetzt werden, wenn die Zentraleinheit CU und zumindest eine Sensoreinheit SU über drahtgebundene Verbindung direkt oder über mehrere Knoten/Hops kommuniziert, wie beispielsweise bei einer Ethernetbasierten "Daisy-Chain".

Dabei soll die Laufzeitkorrektur auf Seite der jeweiligen Sensoreinheit SU beim Empfang vom SYNC-Frame MAC_SYNCF abhängig von der Position der Sensoreinheit SU in der Daisy-Chain erfolgen.

Die Laufzeitkorrekturwerte werden bevorzugt für jede Sensoreinheit SU in einer periodischen Laufzeitkorrekturwertermittlung oder zu Beginn der Kommunikation bestimmt, also beispielsweise durch das Aussenden von periodischen Laufzeitmess-Frames.

Eine analoge Datenerfassungs-Vorrichtung AFE tastet die Spannungen U2, U2, U3 ab.

Eine Null-Durchgangs-Erkennungs-Vorrichtung ZCD erkennt Null-Durchgänge im zeitlichen Verlauf der Referenzspannung U_{REF_H1} und zählt die Spannungs-Zyklen der jeweiligen Spannung.

Das Hochfrequenz-Modul RF_M kann beispielsweise durch ein "Zigbee"-Modul ZB_M und eine "Zigbee"-Anwendung ZB_APP gebildet sein, wobei Letztere Ergebnisse RES für Strom, Spannung, Leistung liefert.

Eine Berechnungs-Vorrichtung CALC1 dient zur Berechnung von Wirkleistung P und Blindleistung Q aus entsprechenden Spannungen und Strömen, beziehungsweise aus Spannungs- und Stromzeigern.

Eine Berechnungs-Vorrichtung CALC2 dient
- zur Berechnung von Spannungs-Werten aus Betrags- und Phasen-Informationen, wobei der Aufzählungspunkt dem letzten, vorhergehenden Aufzählungspunkt entspricht,
- zur Bereitstellung der in der Null-Durchgangs-Erkennungs-Vorrichtung ZCD gezählten Messperioden einer Referenzspannung U_{REF_H1},
- zur Bestimmung einer Referenz-Linie LREF von Netzphasen-Leitern L1, L2, L3 des Energieversorgungs-Netzes,
- zur Bestimmung einer Minimal-Spannung U_{MIN}, unter der die Spannungsnullpunktdurchgänge nicht bestimmt bzw. gezählt werden, um eine Fehleranfälligkeit zu verbessern,
- eine optionale Bestimmung einer Phasen-Abfolge von Netz-Spannungen u1, u2, u3 in Form von Spannungs-Zeigern U1, U2, U3 der Netz-Spannung,
- eine Bestimmung von Spannungs-Zeigern U1, U2, U3 aus den Netz-Spannungen u1, u2, u3.

Die Berechnungen der Berechnungs-Vorrichtung CALC2 werden periodisch über Messzyklen durch eine entsprechende Validierungs-Vorrichtung VAL geprüft, insbesondere hinsichtlich Übereinstimmung der Spannungs- und Stromperioden-Nummerierungen.

Die Daten der Vorrichtung zur Referenz-Phasen-Übertragung PHU wird mithilfe des Senders beziehungsweise Empfängers UART in der Zentraleinheit CU an ein Hochfrequenz-Modul RF_M entsprechend verteilt.

Ein Interrupt-Signal IS für Null-Durchgang in der Referenzspannung U_{REF_H1} wird einem Referenz-Signal-Sender REF_TX innerhalb des Hochfrequenz-Moduls RF_M bereitgestellt, welcher wiederum eine Information bezüglich des Nullpunktdurchgangs der Referenzspannung t0_{EGS} und einer Zeit-Verzögerung beim Aussenden von Sync-Frames MAC_SNCF Δt_{EGS} von einem zentralen Oszillator OSC1 und einer anführende Zähler-Vorrichtung LC erhält.

Mit der Minimal-Spannung U_{MIN} kann sichergestellt werden, dass nur eine minimal zulässige Spannung in der nachfolgenden Auswertung zur Leistungsberechnung berücksichtigt wird, um eine Fehleranfälligkeit zu verbessern.

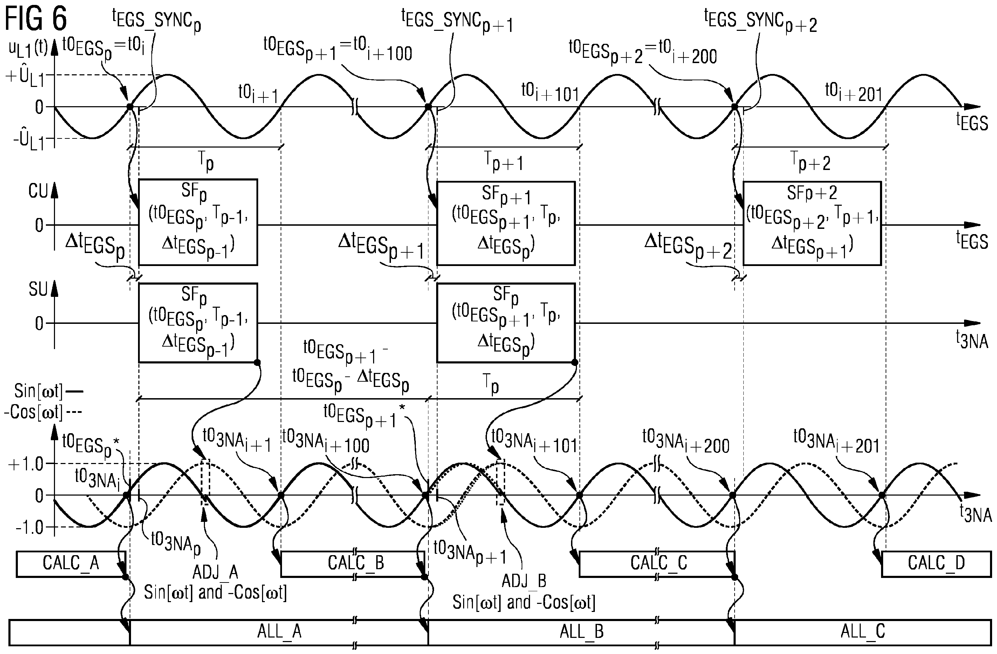

**Fig. 6** zeigt ein Beispiel für einen Signalverlauf im Energieverteilungsnetz, wobei der zeitliche Ablauf der Datenerfassung der Sensordaten SD gezeigt ist.

Die zeitlichen Bereiche ALL_A, ALL_B, ALL_C zeigen die Übertragungen aller Sensoreinheiten SU der jeweiligen Ströme für die Messperioden p-1, p, p+1, p+2 an die Zentraleinheit CU.

Die zeitlichen Bereiche CALC _A, CALC _B, CALC _C, CALC _D zeigen die jeweiligen Berechnungen der aggregierten Ströme für die Messperioden p-1, p, p+1, p+2 in der Sensoreinheit SU.

Die zeitlichen Bereiche ADJ_A, ADJ_B zeigen die Justierungen der Zeiteinheiten der jeweiligen Sensoreinheiten SU aus den Synchronisationsdaten der jeweiligen SYNC-Frames SFₚ₋₁, SFₚ, SFₚ₊₁, SFₚ₊₂, welche allgemein als SYNC-Frame MAC_SYNCF bezeichnet werden.

Das SYNC-Frame SFₚ₋₁ ist in der Figur nicht dargestellt.

Unabhängig vom grammatikalischen Geschlecht eines bestimmten Begriffes sind Personen mit männlicher, weiblicher oder anderer Geschlechteridentität mit umfasst.

### Bezugszeichenliste

- ADJ_A, ADJ_B: Vorgänge zur Justierung von Zeiteinheiten
- AFE: analoge Datenerfassungs-Vorrichtung (engl. "analog frontend")
- AGG: Aggregations-Vorrichtung
- ALL_A, ALL_B, ALL_C: Vorgänge zur Übertragung von Strom-Informationen
- CALC_A, CALC_B, CALC_C, CALC_D: Vorgänge zur Berechnung der aggregierten Ströme
- CU: Zentrale Kontroll-Vorrichtung
- Δt_{EGS_{P-1}}, Δt_{EGS_{P}}: Wert der Zeit-Verzögerung im Messzyklus p-1 bzw. p
- DCOMP: Kompensations-Vorrichtung für Zeit-Verzögerung in der Hochfrequenz-Übertragungsstrecke
- FC: folgende Zähler-Vorrichtung (engl. "follower clock")
- I: Strom
- I_{H1}: Komplexer Stromzeiger
- I_{H1p}: (aggregierter) komplexer Stromzeiger
- IS: Interrupt-Signal für Null-Durchgang der Referenz-Spannung
- L1, L2, L3: Netzphasen-Leiter
- L_{REF}: Referenz-Leiter
- LC: anführende Zähler-Vorrichtung (engl. "leader clock")
- LV: Niederspannungs-Bereich
- MAC_SYNCF, SFₚ₋₁, SFₚ, SFₚ₊₁, SFₚ₊₂,: Synchronisations-Rahmen mittels MAC-Layer-basiertem "Multicast" von Synchronisations-Rahmen
- N1, N2: Netzwerk
- NC1, NC2: Netzwerk-Kontroll-Vorrichtung
- OSC1, OSC2: Oszillator
- p: Messperiode
- Pp: (Aggregierte) Wirkleistung innerhalb einer Messperiode p
- PHU: Vorrichtung zur Referenz-Phasen-Übertragung
- Qp: (Aggregierte) Blindleistung innerhalb einer Messperiode p
- REF_TX: Referenz-Signal-Sender
- RES: Ergebnisse für Strom, Spannung, Leistung
- RF_L: Hochfrequenz-Übertragungsstrecke (engl. "radio frequency link")
- RF_M: Hochfrequenz-Modul

- SD: Sensor-Daten, wie Strom-Zeiger I_{H1p} für Wechselstromwerte des Primär-Stroms (xₙ)
- SU: lokale Kontroll-Vorrichtung, Sensor-Vorrichtung
- SFₚ₋₁, SFₚ, SFₚ₊₁, SFₚ₊₂, t0_{EGSₚ}: Nullpunkt-Durchgangs-Zeitpunkt in der zentralen Kontroll-Vorrichtung
- t0_{EGSₚ₋₁}: Nullpunkt-Durchgangs-Zeitpunkt in der vorhergehenden Messperiode p-1
- t_{3NA}: Zählerwert der lokal ermittelte Netzspannungs-Periodendauer in der lokalen Kontroll-Vorrichtung
- t_{EGS}: Zeit, welche durch den Zähler LC bereitgestellt wird
- Tₚ: aktuelle Periodendauer der Netzspannung
- TR: Transformatoren
- u1, u2, u3: Zeitverläufe der Netz-Spannungen an der Eingängen u1, u2, u3 der Zentraleinheit
- U1, U2, U3: Spannungs-Zeiger der Netz-Spannung
- U_{MIN}: Minimal-Beträge der Spannungen u1, u2 bzw. u3
- U_{REF}: Referenz-Spannung
- UART: Sender/Empfänger (engl. "Universal Asynchronous Receiver Transmitter")
- UC_D: "Unicast"-Datenübertragung
- VAL: periodische Validierung eines Messzyklus
- x, y: Koordinaten-Achsen
- ZB_APP: Zigbee-Anwendung
- ZB_M: Zigbee-Modul
- ZCD: Null-Durchgangs-Erkennung (engl. "zero crossing detection")

## Patentansprüche

1. Verfahren zur Zeitsynchronisation von Sensoreinheiten (SU) in einem verteilten System, wobei die Sensoreinheiten (SU) jeweils eine interne Zeiteinheit (FC) aufweisen, und
wobei von den Sensoreinheiten (SU) Sensordaten (SD) erfasst und über ein Funknetz (RFN) an eine Zentraleinheit (CU) übermittelt werden, und
wobei im Funknetz (RFN) in regelmäßigen, zeitlichen Abständen ein Kennsignal (MAC_SYNCF) ausgesendet wird,
dass ein Empfang des Kennsignals (MAC_SYNCF) in einer jeweiligen Sensoreinheit (SU) überwacht wird,
dass bei Empfang eines charakteristischen Zeitmerkmal des Kennsignals (MAC_SYNCF) jeweils ein aktueller Wert der internen Zeiteinheit (FC) der jeweiligen Sensoreinheit (SU) mit zumindest einer im Kennsignal enthaltene Senderidentifikation gespeichert wird,
dass bei Erfassen von Sensordaten (SD) ein weiterer, aktueller Wert der internen Zeiteinheit (FC) der jeweiligen Sensoreinheit (SU) gespeichert wird,
dass den erfassten Sensordaten (SD) zumindest der bei Empfang des charakteristischen Zeitmerkmals des Kennsignals gespeicherte Wert der internen Zeiteinheit, die zugehörige Senderidentifikation des Kennsignals, und der weitere, bei Erfassen der Sensordaten (SD) gespeicherte Wert der internen Zeiteinheit (FC) zugeordnet werden und gemeinsam mit den Sensordaten (SD) an die Zentraleinheit (CU) übertragen werden, und
dass anhand der Senderidentifikation eine Bezugszeitbasis und anhand des bei Empfang des charakteristischen Zeitmerkmals des Kennsignals gespeicherten Werts der internen Zeiteinheit (FC) der jeweiligen Sensoreinheit (SU) und des beim Erfassen der Sensordaten (SD) weiteren, gespeicherte Werts der internen Zeiteinheit (FC) der jeweiligen Sensoreinheit (SU) eine zeitliche Relation der übertragenen Sensordaten (SD) der jeweiligen Sensoreinheit (SU) zur Bezugszeitbasis abgeleitet werden, **dadurch gekennzeichnet, dass**
die Zentraleinheit (CU) Spannungs- und Phasenwerte von zumindest einer der drei Phasenleiter eines Energieversorgungsnetzes erfasst, aus welchen Synchronisierungs-Daten (t0_{EGSp}, Tₚ) zur Frequenz oder Periodendauer, sowie zur Phasenlage der Spannung zumindest eines der drei Phasenleiter in Bezug auf den Erfassungszeitpunkt der Spannungs- und Phasenwerte des zumindest einen der drei Phasenleiter ermittelt und an die Sensoreinheiten (SU) übermittelt werden, und
die jeweilige Sensoreinheit (SU) die jeweiligen Sensordaten (SD) in Form von Stromwerten in Bezug auf die Synchronisierungs-Daten (t0_{EGSp}, Tₚ) erfasst, welche Sensordaten (SD) an die Zentraleinheit (CU) übertragen werden, und in der Zentraleinheit (CU) aus den Spannungswerten und Stromwerten Leistungen berechnet werden.

2. Verfahren nach dem vorhergehenden Anspruch, wobei die Synchronisierungs-Daten (t0_{EGSp}) betreffend die Phasenlage der Spannung zumindest eines der drei Phasenleiter in Bezug auf den Erfassungszeitpunkt der Spannungs- und Phasenwerte des zumindest einen der drei Phasenleiter durch den Zeitpunkt der Übermittlung von der Zentraleinheit (CU) an die jeweilige Sensoreinheit (SU) gebildet sind.

3. Verfahren nach einem der vorhergehenden Ansprüche, wobei die Synchronisierungs-Daten (t0_{EGSp}, Tₚ) mithilfe des Kennsignals (MAC_SYNCF) an die Sensoreinheiten (SU) übermittelt werden.

4. Verfahren nach einem der vorhergehenden Ansprüche, wobei die Synchronisierungs-Daten (t0_{EGSp}, Tₚ) über mehr als eine Periode der Spannungs- und Phasenwerte der drei Phasen des Energieversorgungsnetzes ermittelt werden, bevorzugt aus zumindest zehn Perioden, besonders bevorzugt aus zumindest 100 Perioden.

5. Verfahren nach einem der vorhergehenden Ansprüche, wobei die Zentraleinheit (CU) Spannungs- und Phasenwerte von einem Phasenleiter des Energieversorgungsnetzes und erste ergänzende Synchronisierungs-Daten (Δt_{EGSₚ₋₁}) zur Zeit-Verzögerung bei der Aussendung des Kennsignals (MAC_SYNCF) erfasst, welche in einem vorhergehenden Zeitraum erfasst wurde, welche vor dem aktuellen Zeitraum liegt, in welchem die Synchronisierungs-Daten (t0_{EGSp}, Tₚ) erfasst werden, und die ersten ergänzenden Synchronisierungs-Daten (Δt_{EGSₚ₋₁}) an die jeweilige Sensoreinheit (SU) übermittelt werden, bevorzugt mithilfe des Kennsignals (MAC_SYNCF), und die ersten ergänzenden Synchronisierungs-Daten (Δt_{EGSₚ₋₁}) bei der Erfassung der jeweiligen Sensordaten (SD) durch die jeweilige Sensoreinheit (SU) berücksichtigt werden.

6. Verfahren nach einem der vorhergehenden Ansprüche, wobei die Zentraleinheit (CU) ferner eine interne zentrale Zeiteinheit aufweist, deren Wert zweite ergänzende Synchronisierungs-Daten (t_{EGS}) bildet, und die zweiten ergänzenden Synchronisierungs-Daten an die jeweilige Sensoreinheit (SU) übermittelt werden, bevorzugt mithilfe des Kennsignals (MAC_SYNCF), und die zweiten ergänzenden Synchronisierungs-Daten (t_{EGS}) bei der Erfassung der jeweiligen Sensordaten (SD) durch die jeweilige Sensoreinheit (SU) berücksichtigt werden.

7. Verfahren nach einem der vorhergehenden Ansprüche, wobei die Stromwerte der jeweiligen Sensoreinheit (SU) zu aggregierten Stromzeigern (I_{H1p}) aggregiert werden, und die aggregierten Stromzeiger (I_{H1p}) an die Zentraleinheit (CU) übertragen werden, und in der Zentraleinheit (CU) aus den Spannungswerten und den aggregierten Stromzeigern (I_{H1p}) Leistungen berechnet werden.

8. Verteiltes System zur Zeitsynchronisation von Sensoreinheiten (SU), umfassend eine Zentraleinheit (CU), wobei das System dazu eingerichtet ist, das Verfahren nach einem der vorhergehenden Ansprüche auszuführen.
